# EUROPEAN PATENT SPECIFICATION

(11) **EP 1 153 647 B1**
(45) Date of publication and mention of the grant of the patent: **27.01.2010**
(21) Application number: 01850085.0
(22) Date of filing: 09.05.2001
(51) Int. Cl.: B01D 53/86, B01J 19/00, F01P 11/14

(54) **Motor vehicle comprising a catalytic converter mounted downstream a radiator belonging to the motor**
Motorfahrzeug mit einem Katalysator stromabwärts eines Kühlers einer Brennkraftmaschine
Véhicule automobile avec convertiseur catalytique disposée en amont d'un radiateur du moteur

(30) Priority: 10.05.2000 SE 0001765
(43) Date of publication of application: 14.11.2001
(73) Proprietor: VOLVO CAR CORPORATION, 405 08 Göteborg (SE)
(72) Inventor: Älleving, Peter, 405 08 Göteborg (SV); Unger, Anders, 405 08 Göteborg (SV); Sköld, Jan, 405 08 Göteborg (SV); Petersson, Martin, 405 08 Göteborg (SV); Max, Erland, 405 08 Göteborg (SV)
(74) Representative: Hammond, Andrew David

(56) References cited:
- EP-A- 0 501 003
- EP-A2- 1 082 990
- FR-A- 2 747 319
- US-A- 3 738 088
- PATENT ABSTRACTS OF JAPAN vol. 017, no. 639 (M-1515), 26 November 1993 (1993-11-26) & JP 05 201245 A (ZEXEL CORP), 10 August 1993 (1993-08-10)
- PATENT ABSTRACTS OF JAPAN vol. 1997, no. 05, 30 May 1997 (1997-05-30) & JP 09 024244 A (FUJI ELECTRIC CO LTD), 28 January 1997 (1997-01-28)
- PATENT ABSTRACTS OF JAPAN vol. 010, no. 366 (C-390), 6 December 1986 (1986-12-06) & JP 61 161124 A (KAWASAKI STEEL CORP), 21 July 1986 (1986-07-21)
- PATENT ABSTRACTS OF JAPAN vol. 017, no. 111 (M-1376), 8 March 1993 (1993-03-08) & JP 04 297709 A (MATSUSHITA ELECTRIC IND CO LTD), 21 October 1992 (1992-10-21)
- PATENT ABSTRACTS OF JAPAN vol. 017, no. 645 (M-1517), 30 November 1993 (1993-11-30) & JP 05 203151 A (TOKYO ELECTRIC POWER CO INC:THE;OTHERS: 01), 10 August 1993 (1993-08-10)
- LARS GREGER ET AL.: "PremAir Catalyst System" SAE TECHNICAL PAPER SERIES, 982728, 19 October 1998 (1998-10-19), SAN FRANCISCO CA ISSN: 0148-7191

## Description

### Technical field

The present patent application relates to a motor vehicle in accordance with the preamble of claim 1. Particularly, the patent application relates to a motor vehicle comprising an engine, a cooling circuit connected to the engine provided with a heat exchanging member and a catalytic converter located downstream said heat exchanging member, wherein the catalytic converter is arranged to be heated by an air flow passing through the catalytic converter, and the catalytic converter is at least partially externally coated with catalytic material for conversion of substances harmful to the environment in ambient air, and wherein the motor vehicle further comprises a control unit to which detecting means are connected for estimating and/or determining the degree of conversion of the heat exchanging member with the catalytic coating.

### Background of the invention

Radiator assemblies for motor vehicles, where the radiator assembly is coated with catalytic material for conversion of substances harmful to the environment in ambient air when utilising the motor vehicle, are previously known. The purpose of this catalytic coating is to utilise the vehicle for environmental improvement, since the vehicle thereby obtains an ability to clean ambient air. A prerequisite for enabling a catalytic coating to convert a substance is that the coating has assumed its working temperature. As a result of the radiator being heated by the cooling medium, a working temperature for the catalytic coating is provided by means of the air flow from the heat exchanger at the same time as no additional work from the engine is required, since the radiator is intended to emit excess heat. Furthermore, the radiator is positioned in order to provide an extensive heat exchange with the environment, something which is accomplished by means of placing the radiator in a way enabling a good through-flow of air. Since the air flow in some cases is insufficient, normally a fan provides the additional air flow which is sufficient for cooling the engine. This implies that large air quantities pass through the radiator, thereby enabling the catalytic coating to clean large quantities of air.

FR-A-2 747 319 discloses a device for reducing atmospheric pollution containing layers of the appropriate catalysts to destroy the polluting gases, mounted on thin supports. These are formed of extensions of thin fins on a heat exchanger mounted on an automobile so it is crossed by a flow of atmospheric air. The fins are swept by the flow and contribute to the heat exchange between the air and a fluid circulating in the exchanger.

US-A-3 738 088 discloses an air filtering assembly of a driven vehicle for cleaning pollution from the ambient air in the path of the vehicle by utilizing the vehicle and assembly as a mobile cleaning device.

The article "PremAir Catalyst System" 19-22 October 1998, SAE Technical Paper 982728, by Greger et al, mentions in the "VEHICLE SETUP" section, that a vehicle was outfitted with numerous sensors for different purposes. Data from these sensors were used in order to evaluate the effect of inter alia ozone conversion.

However, as a result of the exposed position of the radiator and consequently the exposed position of the catalytic converter, it has been found that the catalytic function may degrade without a driver receiving any information about this. Neither will the driver realize that the function has degraded from the behaviour of the vehicle, since a loss of the catalytic function does not affect the performance of the vehicle otherwise.

### Summary of the invention

One object of the invention is to provide a vehicle where a driver or maintenance staff can be informed about the status of the catalytic function which is provided by means of the catalytic coating of a catalytic converter mounted downstream a heat exchanger included in a cooling system connected to an engine. This object is achieved by means of a motor vehicle in accordance with the characterising portion of claim 1.

Preferred embodiments are listed in the dependent claims.

### Description of drawings

In the following, the invention will be described in greater detail with reference to attached drawings, in which
- Fig. 1: is a schematic illustration of a combustion engine.
- Fig. 2: is a schematic illustration of a combustion engine.
- Fig. 3: is a schematic illustration of a combustion engine , and
- Fig. 4: is a schematic illustration of a combustion engine according to an embodiment of the invention.

### Description of embodiments

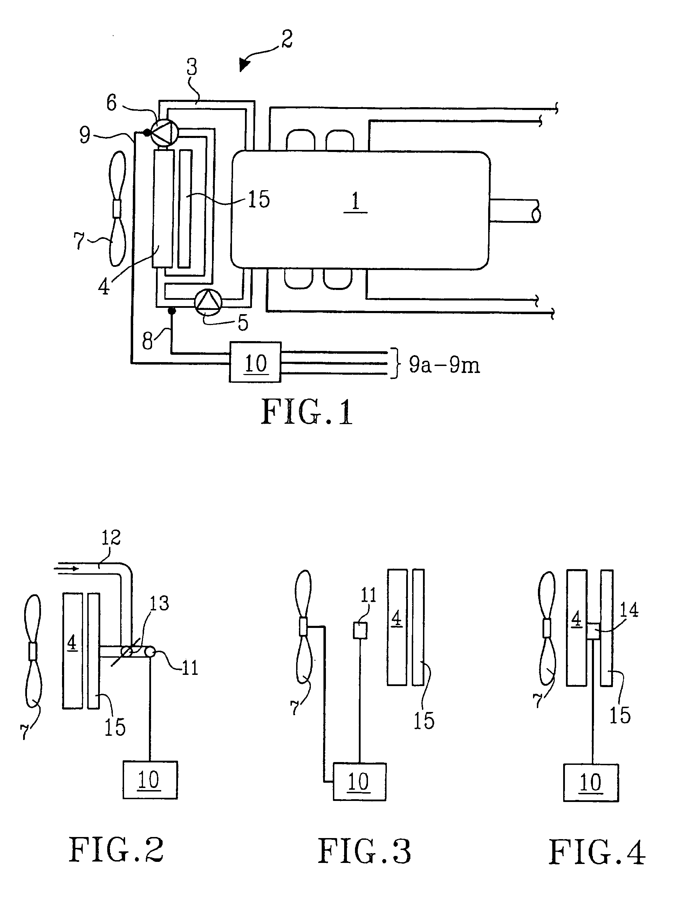

Fig. 1 shows an engine 1 for a motor vehicle. In a variant of a motor vehicle, the engine is constituted of a conventional combustion engine. A cooling circuit 2 is fitted to the engine 1. The cooling circuit is of a conventional type and normally comprises cooling channels 3 connected to cooling channels (not shown) included in the engine 1, a heat exchanger 4 which is arranged for heat emission to the environment, a coolant pump 5 which is arranged to drive the coolant around inside the cooling circuit, and also a thermostat valve 6 which is arranged to open, and to shut the flow of the coolant through the heat exchanger and instead allow the coolant to by-pass the heat exchanger in a parallel channel.

In order to ensure that the air flow through the heat exchanger is sufficient also when the vehicle drives slowly or stands still, a fan 7 is arranged in connection with the heat exchanger. The fan can be driven in any way well known to the skilled person, i.e. by means of belt driving or chain driving from a power outlet coupled to the crankshaft or camshaft of the vehicle, or by means of an electric motor coupled to the fan.

In a variant of a motor vehicle the fan is arranged in order to be reversible. In this case, the fan preferably is driven by an electric motor, but it is also conceivable to arrange a gear between driving belt or chain and the fan wherein mechanical driving can be utilised.

Downstream the heat exchanging member, there is a catalytic converter which is at least partially coated with a catalytic material. The catalytic material is designed to convert a substance harmful to the environment to one or several substances which is/are non-harmful to the environment. Examples of substances harmful to the environment are particles, ozone, carbon monoxide, nitrous oxide, VOC, HC, NMOG, NOx, SO2 and methane.

In a variant, the catalytic material covers cooling flanges included in the heat exchanger, wherein the catalytic material is given a large surface which is exposed towards the environment.

In order to detect the degree of conversion of the heat exchanging member, detecting means 8, 9 are connected to control unit 10. In one variant of a motor vehicle, additional detecting means 9a - 9n are connected to the control unit 10. These detecting means 9a - 9n measure parameters related to the vehicle and the environment such as temperature, oxygen storage, flow, pressure, pressure drop, heat conduction, weight, conductivity, resistance, adhesion, fouling, chemical composition, galvanic potential, fluorescence, reflectance, absorbance. Subsequently, one or several of said parameters can be utilised when determining the concentration of the substances harmful to the environment which are converted.

In a variant of a motor vehicle, said detecting means 9, 9a - 9n are utilised in order to determine the concentration in the environment of the substances harmful to the environment which are converted by the catalytic material. In order to accomplish this, the determination is based on the sensors measuring the substance concentration before passage through the radiator.

As an alternative variant of a motor vehicle, said set of detecting means or sensors comprises a pressure sensor which gives a first output signal dependent on static pressure downstream the heat exchanging unit and thereby on the air flow through the heat exchanger, wherein said control unit is arranged to estimate a degree of conversion based on said first output signal.

In still another alternative variant of a motor vehicle, said set of detecting means or sensors comprises a differential pressure sensor which gives a first output signal dependent on the pressure drop across the heat exchanging unit and thereby on the air flow through the heat exchanger, wherein said control unit is arranged to estimate a degree of conversion based on said first output signal.

In a further alternative variant of a motor vehicle, said set of detecting means or sensors comprises a flow sensor which gives a first output signal dependent on the air flow through the heat exchanger, wherein said control unit is arranged to estimate a degree of conversion based on said first output signal.

The control unit 10 is of a type known *per se*, and will therefore not be described in any greater detail. In one variant of a motor vehicle, the control unit can be constituted of a microprocessor included in the engine control system. It is also conceivable that the control unit 10 is constituted of a separate processor, which is able to communicate with other processors in the vehicle via a bus.

In a first example of a motor vehicle said detecting means 8, 9 are constituted of a first temperature sensor which is arranged to measure the temperature of the coolant. Since the catalytic material has to reach a predetermined temperature before conversion can take place, an initial approximation of the degree of conversion of the heat exchanging member with the catalytic coating can be performed by means of measuring if a so-called ignition temperature of the catalytic material has been reached.

A method of performing said detection comprises to initially allow the engine temperature to stabilize at for example 90° C. Thereafter, the thermostat valve is opened completely, and the effect of the radiator is measured. The response constitutes a measure of the cooling effect of the radiator without any influence from the thermostat valve.

Furthermore, the efficiency of the radiator and thereby the degree of conversion can be estimated in an initial approximation by means of a simple surveillance of the temperature of the cooling system. In case the temperature rises too much, the capacity of the radiator has been reduced, and thereby also the degree of conversion has been reduced.

In a second example of a motor vehicle, said detecting means 8, 9 further comprise a first and a second temperature sensor. In a further variant, said first and second temperature sensors 8, 9 are mounted in the cooling circuit 2 with intermediate cooling channels in the heat exchanger 4, wherein said control unit 10 is arranged to estimate the heat emission of the heat exchanger 4 from the difference between estimated temperature of the first and of the second temperature sensor.

By means of measuring the temperature at two separate positions of the heat exchanger with intermediate cooling channels, it is possible to estimate the status of the heat exchanger and thereby to estimate the degree of conversion of the catalytic coating within the area. In case the heat exchanger has cooling channels which are blocked, as a result of channels being partially or entirely filled with air or being blocked in another way, or in case cooling channels have fallen off which is not uncommon in older vehicles, the efficiency of the radiator will be reduced. This means that the reduction of the coolant temperature during the passage through the radiator will become smaller. Since no conversion will take place in those areas where channels have been blocked, and the ignition temperature as a result of this is not reached, or in areas which have fallen off, the degree of conversion can be estimated from information on the temperature reduction of the coolant during the passage through the heat exchanger.

In an example of a motor vehicle, the first temperature sensor 8 is placed upstream the heat exchanger 4, and the second temperature sensor 9 is placed downstream the heat exchanger 4. For example, the first temperature sensor is constituted of a thermostat valve 6 present in the cooling circuit, which is arranged to open a passage via the heat exchanger when the coolant has reached its working temperature.

Alternatively, the temperature sensors can be placed directly inside the heat exchanger material, in direct connection with flanges included in the heat exchanger.

In an example of a motor vehicle which is shown in Fig. 2, said detecting means are constituted of a first sensor 11 placed in connection with the heat exchanger. The sensor is constituted of any previously known detector for the substance harmful to the environment, which for example consists of ozone. In order to estimate the degree of conversion of the catalytic coating, a value measured on treated air has to be compared with a value for untreated air. In a first variant of a motor vehicle, this value can be normative, i.e. only be constituted of a value stored in the control unit. In a second variant, the comparison is constituted of a sensor which is subjected to treated air and a sensor which is subjected to untreated air. In another variant, only a first sensor is utilised, wherein two alternative air routes are provided for reaching the sensor, partly a route with passage via the heat exchanger, and partly a route where passage does not take place. In order to accomplish this, according to one variant, the motor vehicle is provided with an air channel 12, which partly has channel which is arranged to direct air to the detecting means without passing the heat exchanger, and partly is arranged to direct air to the detecting means via passage through the heat exchanger. An air valve 13, enabling passage from the selected inlet, is arranged in said air channel. Subsequently, a comparison of the output signal from these two measurement points can be utilised in order to estimate the degree of conversion of the catalytic coating on the heat exchanger.

In example of a motor vehicle which is shown in Fig. 3, instead of said air channel 12, the direction of rotation of the fan 7 can be varied. In this case, a sensor 11 can be utilised in order to measure the content of substance harmful to the environment in air which has passed the heat exchanger, and in air which has not passed the heat exchanger. Accordingly, the sensor can be mounted upstream or downstream the radiator, as counted in the normal travelling direction of the vehicle, wherein a first measurement is performed with the fan operating in the normal direction and a second with the fan operating in reversed direction. In order to enable reversing of the fan, the fan preferably is controlled by an electric motor, but it is also possible to drive the fan in a conventional way by means of belt or chain driving if a gear is arranged between the drive shaft from the engine and the fan.

In a variant the air inlet of the combustion engine can be utilised instead of a fan in order to collect partly an air flow which has passed through the radiator, and partly one which has not passed through the radiator. In this case, two air channels are fitted to the air inlet of the combustion engine, partly a channel having its inlet downstream the radiator, and partly one having its inlet from an unaffected region. A sensor is mounted in the channel system which is driven by the air inlet of the combustion engine.

Since sensors, as a rule, are sensitive to the environment, the sensor preferably is mounted in a protected location, for example behind the radiator. In a variant of a motor vehicle, the sensor is constituted of an ozone sensor.

In a further variant the vehicle comprises means for generating the substance harmful to the environment, wherein said means are arranged to subject the heat exchanger to a predetermined concentration upstream the heat exchanger when determining the degree of conversion of the substance harmful to the environment, whereafter said detecting means are arranged to measure the concentration of the substance harmful to the environment downstream the heat exchanger.

In those examples where only one sensor or detecting means is utilised, preferably a predetermined level of the substance harmful to the environment is produced by said generating means. In case sensors are placed both upstream and downstream the heat exchanging member, in a variant the concentration of the substance harmful to the environment is measured partly before passage through the heat exchanging member, and partly after passage through the heat exchanging member, wherein determination of the degree of conversion can take place by means of comparing the measured values upstream and downstream the heat exchanger.

In a variant, said means for generating a substance harmful to the environment are constituted of an ozone generator, in which ozone is generated for example by means of discharges or by UV-light.

According to one embodiment of the invention, which is shown in Fig. 4, said set of detecting means or sensors 9, 9a - 9n comprises a test cell 14, coated with a catalytic coating, which is mounted on the heat exchanger or in a position which is equally exposed to the influence from the environment. Equally exposed means that a test cell placed in the equivalent position upon an average is degraded at the same rate as, or at a rate which exhibits a linear relationship to, a cell placed on the heat exchanger.

Accordingly, in one embodiment of the invention, said detecting means comprise a test cell coated with a catalytic coating exhibiting electrical or optical properties which change with wear and/or fouling, and where said control unit is arranged to estimate the degree of conversion of the heat exchanging member with the catalytic coating from an output signal generated by said test cell.

In a preferred embodiment, the optical properties of the test cell can change with loss of the catalytic material. This can be accomplished by means of applying the catalytic material onto a transparent carrier and placing a light detector in connection with said test cell. When losing catalytic material, the transparency increases which enables detection of the degree of conversion. The transparent carrier preferably is constituted of a plastic having an adhesiveness to catalytic material which is similar to aluminium.

In one embodiment utilising such a test cell, the electrical properties of the catalytic coating located on the test cell change with wear and/or fouling.

In a second embodiment utilising such a test cell, the test cell carries an additional conductive layer on top of the catalytic coating, wherein the electrical properties of the additional conductive layer change with wear and/or fouling.

In a third embodiment utilising such a test cell, the test cell carries an additional conductive layer on top of the catalytic coating, wherein the electrical properties of the additional conductive layer change with wear and/or fouling.

In a fourth embodiment utilising such a test cell, the test cell carries one or several wires, the electrical properties of which change with wear and/or fouling, wherein the wires are designed to change in relation to the degradation of the catalytic coating. In a preferred embodiment of the fourth embodiment utilising said test cell, the wires are designed in a way sensitive to corrosion and insulated so that the insulation falls off at the same rate as the catalytic coating degrades, wherein the wires corrode and their electrical properties change or the circuit is opened. In a further preferred embodiment, the wires are sensitive to corrosion and insulated so that the insulation falls of at the same rate as the catalytic coating degrades wherein the wires corrode and their electrical properties change or the circuit is opened.

Furthermore, the test cell can be provided with means for heating the wires, wherein degradation of the catalytic material and thereby the degree of conversion is estimated by means of heating the wires with a current pulse after which the cooling course is studied by means of which the thermal conductivity of the surface is determined and thereby the correlating degradation of the catalytic coating.

As mentioned above, the test cell can be mounted on the heat exchanger or in an equally exposed position, alternatively constitute a portion of the surface of the heat exchanger.

In case a change of the optical properties of the test cell is utilised, according to one embodiment, said test cell comprises a photocell mounted beneath a transparent carrier coated with a catalytic coating, wherein said test cell is arranged to generate an output signal dependent on the optical absorbance or reflectance of the test cell and thereby correlating with the degradation of the catalytic coating. Furthermore, according to a further embodiment, said test cell can comprise a second photocell mounted beneath a second transparent carrier without any catalytic coating, wherein said test cell is arranged to generate a second output signal dependent on the difference in absorbance or reflectance between the two transparent carriers, and wherein said second output signal is utilised in order to determine the degradation of the catalytic coating.

In order to ensure that the measurement of reflectance and absorbance takes place with a well-defined light intensity, in one embodiment of the invention, said detecting means comprise a light source illuminating the test cell when determining absorbance or reflectance, wherein a light intensity which is well-defined for the determination of absorbance or reflectance is obtained.

In a further embodiment of the invention utilising a test cell, the optical properties of which change with degradation of the catalytic material, said detecting means comprise a photocell mounted in such a way that it is hit by light emitted via fluorescence or phosphorescence from the catalytic coating, wherein a first output signal is created dependent on the optical absorbance or reflectance of the test cell and thereby correlating with the degradation of the catalytic coating. In order to ensure that emitted light remains within a controlled range, the test cell is provided with a light source illuminating the test cell with light which results in light being emitted from the test cell which is measured by the photocell.

In a preferred embodiment, said detecting means comprise a second photocell which is mounted in such a way that it is hit by light emitted from a surface which is not coated with fluorescent material, wherein a second output signal is generated and utilised as a reference for the first output signal from the surface which is coated with a catalytic coating having fluorescence, wherein the ratio or difference between the first and second photocell is utilised in order to determine the degradation of the catalytic coating.

In order to ensure that the test cell estimates maximum deviation from optimum degree of conversion, the test cell preferably is mounted in an exposed position, for example directly behind the fan.

The invention is not limited to the above-described embodiments, but may be varied within the scope of the following claims.

## Claims

1. A motor vehicle comprising an engine (1), a cooling circuit (2) connected to the engine (1) provided with a heat exchanging member (4) and a catalytic converter (15) located downstream said heat exchanging member (1), wherein the catalytic converter (15) is arranged to be heated by an air flow passing through the catalytic converter (15), wherein the catalytic converter (15) is at least partially externally coated with catalytic material for conversion of substances harmful to the environment in ambient air, wherein the motor vehicle further comprises a control unit (10) to which detecting means (8,9) are connected for estimating and/or determining the degree of conversion, of a substance harmful to the environment, of the catalytic converter (15)
**characterised in that** said detecting means (8,9) comprise a test cell (14), which is mounted on said heat exchanging member (4) or in a position which is equally exposed to the influence of the environment or constitutes a portion of the surface of said heat exchanging member (4), said test cell (14) being coated with a catalytic coating exhibiting electrical or optical properties which change with wear and/or fouling and where said control unit is arranged to estimate the degree of conversion of the heat exchanging member (4) with the catalytic coating from an output signal generated by said test cell (14).

2. A motor vehicle according to claim 1,
**characterised in that** the test cell (14) comprises one or several wires, the electrical properties of which change in relation to the degradation of the catalytic coating.

3. A motor vehicle according to claim 2,
**characterised in that** the wires are sensitive to corrosion and insulated, and that the insulation falls off at the same rate as the catalytic coating degrades, wherein the wires corrode and their electrical properties change or the circuit is opened.

4. A motor vehicle according to claim 2 or 3,
**characterised in that** the test cell (14) comprises means for heating the wires, wherein degradation of the catalytic material and thereby the degree of conversion is estimated by means of heating the wires with a current pulse after which the cooling course is studied by means of which the thermal conductivity of the surface is determined and thereby the correlating degradation of the catalytic coating.

5. A motor vehicle according to claim 1,
**characterised in that** said test cell (14) comprises a photocell mounted beneath a transparent carrier coated with a catalytic coating, wherein said test cell (14) is arranged to generate an output signal dependent on the optical absorbance or reflectance of the test cell (14) and thereby correlating with the degradation of the catalytic coating.

6. A motor vehicle according to claim 5,
**characterised in that** said test cell (14) comprises a second photocell mounted beneath a second transparent carrier without catalytic coating, wherein said test cell (14) is arranged to generate a second output signal dependent on the difference in absorbance or reflectance between the two transparent carriers, wherein said second output signal is utilised in order to determine the degradation of the catalytic coating.

7. A motor vehicle according to claim 5 or 6,
**characterised in that** said detecting means (8,9) comprise a light source illuminating the test cell (14) when determining absorbance or reflectance, wherein a light intensity which is well-defined for the determination of absorbance or reflectance is obtained.

8. A motor vehicle according to claim 1,
**characterised in that** said detecting means (8,9) comprise a photocell mounted in such a way that it is hit by light emitted via fluorescence or phosphorescence from the catalytic coating, wherein a first output signal is created dependent on the optical absorbance or reflectance of the test cell (14) and thereby correlating with the degradation of the catalytic coating.

9. A motor vehicle according to claim 8,
**characterised in that** said detecting means (8,9) comprise a light source illuminating the test cell (14), wherein emitted light from the catalytic coating is generated.

10. A motor vehicle according to claim 8 or 9,
**characterised in that** said detecting means (8,9) comprise a second photocell which is mounted in such a way that it is hit by light emitted from a surface which is not coated with fluorescent material, wherein a second output signal is generated which is utilised as a reference for the first output signal from the surface which is coated with a catalytic coating having fluorescence, wherein the ratio or difference between the first and second photocell is utilised in order to determine the degradation of the catalytic coating.

## Patentansprüche

1. Kraftfahrzeug, das einen Motor (1) und einen mit dem Motor (1) verbundenen Kühlkreis (2), der mit einem Wärmeaustauschelement (4) und einem stromabseitig von dem Wärmeaustauschelement (1) angeordneten katalytischen Umsetzer (15) versehen ist, umfasst, wobei der katalytische Umsetzer (15) dazu ausgelegt ist, durch eine Luftströmung, die sich durch den katalytischen Umsetzer (15) bewegt, erwärmt zu werden, wobei der katalytische Umsetzer (15) außen wenigstens teilweise mit katalytischem Material für die Umsetzung von für die Umgebung schädlichen Substanzen in der Umgebungsluft beschichtet ist, wobei das Kraftfahrzeug ferner eine Steuereinheit (10) umfasst, mit der Erfassungsmittel (8, 9) verbunden sind, um den Umsetzungsgrad einer für die Umgebung schädlichen Substanz des katalytischen Umsetzers (15) zu schätzen und/oder zu bestimmen,
**dadurch gekennzeichnet, dass** die Erfassungsmittel (8, 9) eine Testzelle (14) umfassen, die an dem Wärmeaustauschelement (4) oder an einer Position, die dem Einfluss der Umgebung in gleicher Weise ausgesetzt ist oder einen Abschnitt der Oberfläche des Wärmeaustauschelements (4) bildet, angebracht ist, wobei die Testzelle (14) mit einer katalytischen Beschichtung beschichtet ist, die elektrische oder optische Eigenschaften zeigt, die sich bei Verschleiß und/oder Verschmutzung ändern, wobei die Steuereinheit dazu ausgelegt ist, den Umsetzungsgrad des Wärmeaustauschelements (4) mit der katalytischen Beschichtung aus einem durch die Testzelle (14) erzeugten Ausgangssignal zu schützen.

2. Kraftfahrzeug nach Anspruch 1,
**dadurch gekennzeichnet, dass** die Testzelle (14) einen oder mehrere Drähte umfasst, deren elektrische Eigenschaften sich in Bezug auf die Verschlechterung der katalytischen Beschichtung ändern.

3. Kraftfahrzeug nach Anspruch 2,
**dadurch gekennzeichnet, dass** die Drähte gegenüber Korrosion empfindlich sind und isoliert sind und dass die Isolierung mit der gleichen Rate, mit der sich die katalytische Beschichtung ändert, abfällt, wobei die Drähte korrodieren und ihre elektrischen Eigenschaften sich ändern oder der Schaltkreis geöffnet wird.

4. Kraftfahrzeug nach Anspruch 2 oder 3,
**dadurch gekennzeichnet, dass** die Testzelle (14) Mittel umfasst, um die Drähte zu beheizen, wobei die Verschlechterung des katalytischen Materials und **dadurch** der Umsetzungsgrad durch Erhitzen der Drähte mit einem Stromimpuls geschätzt wird, woraufhin der Kühlungsverlauf untersucht wird, mittels dessen die spezifische Wärmeleitfähigkeit der Oberfläche und **dadurch** die damit korrelierte Verschlechterung der katalytischen Beschichtung bestimmt wird.

5. Kraftfahrzeug nach Anspruch 1,
**dadurch gekennzeichnet, dass** die Testzelle (14) eine Photozelle umfasst, die unter einem lichtdurchlässigen Träger angebracht ist, der mit einer katalytischen Beschichtung beschichtet ist, wobei die Testzelle (14) dazu ausgelegt ist, ein Ausgangssignal zu erzeugen, das von dem optischen Absorptions- oder Reflexionsvermögen der Testzelle (14) abhängt, und **dadurch** eine Korrelation mit der Verschlechterung der katalytischen Beschichtung herzustellen.

6. Kraftfahrzeug nach Anspruch 5,
**dadurch gekennzeichnet, dass** die Testzelle (14) eine zweite Photozelle umfasst, die unter einem zweiten lichtdurchlässigen Träger ohne katalytische Beschichtung angebracht ist, wobei die Testzelle (14) dazu ausgelegt ist, ein zweites Ausgangssignal zu erzeugen, das von der Differenz des Absorptions- oder Reflexionsvermögens zwischen den zwei lichtdurchlässigen Trägern abhängt, wobei das zweite Ausgangssignal verwendet wird, um die Verschlechterung der katalytischen Beschichtung zu bestimmen.

7. Kraftfahrzeug nach Anspruch 5 oder 6,
**dadurch gekennzeichnet, dass** die Erfassungsmittel (8, 9) eine Lichtquelle umfassen, die die Testzelle (14) beleuchtet, wenn das Absorptions- oder Reflexionsvermögen bestimmt wird, wobei eine Lichtintensität, die für die Bestimmung des Absorptions- oder Reflexionsvermögens wohl definiert ist, erhalten wird.

8. Kraftfahrzeug nach Anspruch 1,
**dadurch gekennzeichnet, dass** die Erfassungsmittel (8, 9) eine Photozelle umfassen, die in der Weise angebracht ist, dass sie von Licht getroffen wird, die mittels Fluoreszenz oder Phosphoreszenz von der katalytischen Beschichtung emittiert wird, wobei ein erstes Ausgangssignal erzeugt wird, das von dem optischen Absorptions- oder Reflexionsvermögen der Testzelle (14) abhängt, und wodurch eine Korrelation mit der Verschlechterung der katalytischen Beschichtung hergestellt wird.

9. Kraftfahrzeug nach Anspruch 8,
**dadurch gekennzeichnet, dass** die Erfassungsmittel (8, 9) eine Lichtquelle umfassen, die die Testzelle (14) beleuchtet, wobei von der katalytischen Beschichtung emittiertes Licht erzeugt wird.

10. Kraftfahrzeug nach Anspruch 8 oder 9,
**dadurch gekennzeichnet, dass** die Erfassungsmittel (8, 9) eine zweite Photozelle umfassen, die in der Weise angebracht ist, dass sie von Licht getroffen wird, die von einer Oberfläche emittiert wird, die nicht mit fluoreszierendem Material beschichtet ist, wobei ein zweites Ausgangssignal erzeugt wird, das als eine Referenz für das erste Ausgangssignal von der mit der katalytischen Beschichtung mit Fluoreszenz beschichteten Oberfläche verwendet wird, wobei das Verhältnis oder die Differenz zwischen der ersten und der zweiten Photozelle verwendet wird, um die Verschlechterung der katalytischen Beschichtung zu bestimmen.

## Revendications

1. Véhicule à moteur comprenant un moteur (1), un circuit de refroidissement (2) relié au moteur (1), équipé d'un élément (4) échangeur de chaleur et d'un convertisseur catalytique (15) situé en aval dudit élément (4) échangeur de chaleur, dans lequel le convertisseur catalytique (15) est agencé pour être chauffé par un flux d'air traversant le convertisseur catalytique (15), dans lequel le convertisseur catalytique (15) est enduit extérieurement, au moins partiellement, d'un matériau catalytique destiné à la conversion de substances nocives pour l'environnement présentes dans l'air ambiant, dans lequel le véhicule à moteur comprend en outre une unité de contrôle (10) à laquelle sont raccordés des moyens détecteurs (8, 9) pour estimer et/ou déterminer le degré de conversion d'une substance nocive pour l'environnement du convertisseur catalytique (15),
***caractérisé en ce que*** lesdits moyens détecteurs (8, 9) comprennent une cellule d'essai (14), qui est montée sur ledit élément (4) échangeur de chaleur ou dans une position qui est tout autant exposée à l'influence de l'environnement ou constitue une partie de la surface dudit élément (4) échangeur de chaleur, ladite cellule d'essai (14) étant enduite d'un revêtement catalytique affichant des propriétés électriques ou optiques qui changent avec l'usure et/ou l'encrassement, et où ladite unité de contrôle est prévue pour estimer le degré de conversion de l'élément (4) échangeur de chaleur avec le revêtement catalytique à partir d'un signal de sortie généré par ladite cellule d'essai (14).

2. Véhicule à moteur selon la revendication 1,
***caractérisé en ce que*** la cellule d'essai (14) comprend un ou plusieurs fils dont les propriétés électriques changent en relation avec la dégradation du revêtement catalytique.

3. Véhicule à moteur selon la revendication 2,
***caractérisé en ce que*** les fils sont sensibles à la corrosion et isolés, et ***en ce que*** l'isolation diminue au même rythme que le revêtement catalytique se dégrade, les fils se corrodant et leurs propriétés électriques changeant ou le circuit s'ouvrant.

4. Véhicule à moteur selon la revendication 2 ou 3,
***caractérisé en ce que*** la cellule d'essai (14) comprend des moyens pour chauffer les fils, la dégradation du matériau catalytique et ainsi le degré de conversion étant estimés par le chauffage des fils avec une impulsion de courant après laquelle l'évolution du refroidissement est étudiée, grâce à quoi la conductivité thermique de la surface est déterminée et, ainsi, la dégradation corrélée du revêtement catalytique.

5. Véhicule à moteur selon la revendication 1,
***caractérisé en ce que*** ladite cellule d'essai (14) comprend une cellule photoélectrique montée sous un support transparent enduit d'un revêtement catalytique, ladite cellule d'essai (14) étant prévue pour générer un signal de sortie dépendant de l'absorbance optique ou du pouvoir de réflexion de la cellule d'essai (14) et se corrélant ainsi avec la dégradation du revêtement catalytique.

6. Véhicule à moteur selon la revendication 5,
***caractérisé en ce que*** ladite cellule d'essai (14) comprend une deuxième cellule photoélectrique montée sous un deuxième support transparent sans revêtement catalytique, ladite cellule d'essai (14) étant prévue pour générer un deuxième signal de sortie dépendant de la différence d'absorbance ou de pouvoir de réflexion entre les deux supports transparents, ledit deuxième signal de sortie étant utilisé pour déterminer la dégradation du revêtement catalytique.

7. Véhicule à moteur selon la revendication 5 ou 6,
***caractérisé en ce que*** lesdits moyens détecteurs (8, 9) comprennent une source lumineuse illuminant la cellule d'essai (14) lors de la détermination de l'absorbance ou du pouvoir de réflexion, une intensité lumineuse étant bien définie pour la détermination de l'absorbance ou du pouvoir de réflexion.

8. Véhicule à moteur selon la revendication 1,
***caractérisé en ce que*** lesdits moyens détecteurs (8, 9) comprennent une cellule photoélectrique montée de telle manière qu'elle soit heurtée par la lumière émise par fluorescence ou phosphorescence du revêtement catalytique, un premier signal de sortie étant créé, qui dépend de l'absorbance optique ou du pouvoir de réflexion de la cellule d'essai (14) et est ainsi en corrélation avec la dégradation du revêtement catalytique.

9. Véhicule à moteur selon la revendication 8,
***caractérisé en ce que*** lesdits moyens détecteurs (8, 9) comprennent une source lumineuse illuminant la cellule d'essai (14), la lumière émise depuis le revêtement catalytique étant générée.

10. Véhicule à moteur selon la revendication 8 ou 9,
***caractérisé en ce que*** lesdits moyens détecteurs (8, 9) comprennent une deuxième cellule photoélectrique qui est montée de telle manière qu'elle soit heurtée par la lumière émise d'une surface qui n'est pas enduite de matériau fluorescent, un deuxième signal de sortie étant généré, qui est utilisé comme référence pour le premier signal de sortie provenant de la surface qui est enduite d'un revêtement catalytique présentant une fluorescence, le rapport ou la différence entre la première et la deuxième photocellule étant utilisé pour déterminer la dégradation du revêtement catalytique.
